# EUROPEAN PATENT SPECIFICATION

(11) **EP 3 404 855 B1**
(45) Date of publication and mention of the grant of the patent: **30.06.2021**
(21) Application number: 17305569.0
(22) Date of filing: 17.05.2017
(51) Int. Cl.: H04B 10/297

(54) **USE OF BAND-PASS FILTERS IN SUPERVISORY SIGNAL PATHS OF AN OPTICAL TRANSPORT SYSTEM**
VERWENDUNG VON BANDPASSFILTERN IN ÜBERWACHUNGSSIGNALBAHNEN EINES OPTISCHEN TRANSPORTSYSTEMS
UTILISATION DE FILTRES PASSE-BANDE DANS DES TRAJETS DE SIGNAL DE SURVEILLANCE D'UN SYSTÈME DE TRANSPORT OPTIQUE

(43) Date of publication of application: 21.11.2018
(73) Proprietor: Alcatel Submarine Networks, 91620 Nozay (FR)
(72) Inventor: AIT SAB, Omar, 91620 NOZAY (FR)
(74) Representative: Loyer & Abello

(56) References cited:
- EP-A1- 1 591 768
- EP-A1- 2 685 641
- US-A1- 2009 324 249
- US-B1- 6 708 004

## Description

### BACKGROUND

### Field

The present disclosure relates to optical communication equipment and, more specifically but not exclusively, to the use of band-pass filters in supervisory signal paths of an optical transport system.

### Description of the Related Art

This section introduces aspects that may help facilitate a better understanding of the disclosure. Accordingly, the statements of this section are to be read in this light and are not to be understood as admissions about what is in the prior art or what is not in the prior art.

Subsea network operators are facing a fast growth in bandwidth demand, in part due to the development and deployment of cloud-based services. As a result, they need to optimize the capacity and performance of their fiber-optic cable plants to enable the corresponding networks to efficiently handle the increasing data flows. Due to this need, one of the requirements to telecom equipment manufacturers is to provide the network operator(s) with a supervisory system that can be used to monitor the status of the submerged plant elements, e.g., to guarantee fault detection and diagnostics, improved maintainability, good performance characteristics throughout the plant's lifespan, upgradable capacity, and/or any other pertinent benchmarks. It is also desirable for the supervisory system to be amenable to a low-cost implementation Prior art document US 6 708 004 B1 discloses a bi-directional optical amplifier comprising two amplifiers, one in each direction with an OTDR monitoring system. A loopback path between the two directions allows to filter the monitoring signal and backscattered signal.

### SUMMARY OF SOME SPECIFIC EMBODIMENTS

At least some of the above-indicated problems in the state of the art are addressed by various embodiments of a bidirectional optical repeater having two unidirectional optical amplifiers and a supervisory optical circuit connected to optically couple the optical ports thereof. In an example embodiment, the supervisory optical circuit provides one or more pathways therethrough for supervisory optical signals, each of these pathways having located therein a respective narrow band-pass optical filter. The supervisory optical circuit further provides one or more pathways therethrough configured to bypass the corresponding narrow band-pass optical filters in a manner that enables backscattered light of any wavelength to cross into the optical path that has therein the unidirectional optical amplifier directionally aligned with the propagation direction of the backscattered light.

According to an example embodiment, provided is an apparatus comprising: a first optical amplifier located in a first optical path and configured to amplify optical signals transmitted in a first direction; a second optical amplifier located in a second optical path and configured to amplify optical signals transmitted in a second direction, the second direction being opposite to the first direction; and an optical circuit connected to optically couple an optical output port of the first optical amplifier and a first optical port of the second optical amplifier; and wherein an optical connection, through the optical circuit, between the optical output port of the first optical amplifier and the first optical port of the second optical amplifier comprises: a first optical pathway configured to direct light traveling in the first direction at the optical output port of the first optical amplifier to the first optical port of the second optical amplifier in a manner that causes the light so directed to travel in the second direction at the first optical port of the second optical amplifier; and a second optical pathway configured to direct light traveling in the second direction at the optical output port of the first optical amplifier to the first optical port of the second optical amplifier in a manner that causes the light so directed to travel in the second direction at the first optical port of the second optical amplifier; wherein the first optical pathway includes a first narrow band-pass optical filter located therein; and wherein the second optical pathway is configured to bypass the first narrow band-pass optical filter The optical circuit is further connected to optically couple an optical input port of the first optical amplifier and a second optical port of the second optical amplifier; and wherein an optical connection, through the optical circuit, between the optical input port of the first optical amplifier and the second optical port of the second optical amplifier comprises:a third optical pathway configured to direct light travelling in the second direction at the second optical port of the second optical amplifier to the optical input port of the first optical amplifier in a manner that causes the light so directed to travel in the first direction at the optical input port of the first optical amplifier; and a fourth optical pathway configured to direct light travelling in the first direction at the second optical port of the second optical amplifier to the optical input port of the first optical amplifier in a manner that causes the light so directed to travel in the first direction at the optical input port of the first optical amplifier; wherein the third optical pathway includes a second narrow band-pass optical filter located therein; and wherein the fourth optical pathway is configured to bypass the second narrow band-pass optical filter.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of an optical transport system according to an embodiment;
FIGs. 2A-2B graphically illustrate certain spectral characteristics of an example narrow band-pass optical filter that can be used in a supervisory optical circuit of an optical repeater of the optical transport system of FIG. 1 according to an embodiment;
FIG. 3 shows a block diagram of an optical repeater that can be used in the optical transport system of FIG. 1 according to an embodiment;
FIG. 4 shows a block diagram of an optical repeater that can be used in the optical transport system of FIG. 1 according to another embodiment;
FIG. 5 shows a block diagram of an optical repeater that can be used in the optical transport system of FIG. 1 according to yet another embodiment;
FIG. 6 shows a block diagram of an optical repeater that can be used in the optical transport system of FIG. 1 according to yet another embodiment; and
FIG. 7 shows a block diagram of an optical repeater that can be used in the optical transport system of FIG. 1 according to yet another embodiment.

### DETAILED DESCRIPTION

Some embodiments may benefit from the use of features disclosed in the concurrently filed patent application by Omar Ait Sab and Ludivine Moirot, entitled "SUPERVISORY SIGNAL PATHS FOR AN OPTICAL TRANSPORT SYSTEM," attorney reference number 820470.

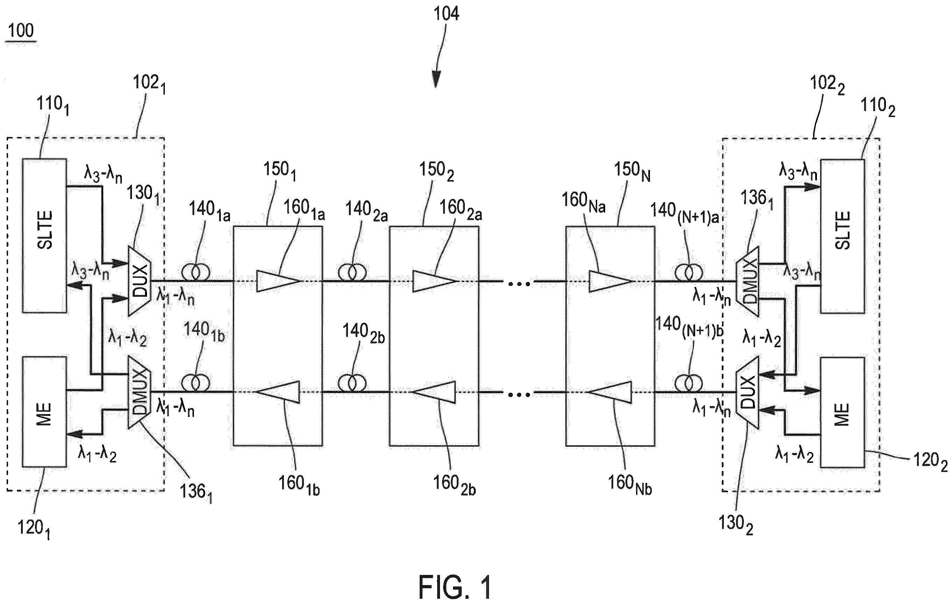

FIG. 1 shows a block diagram of an optical transport system **100** according to an embodiment. In the shown embodiment, system **100** comprises landing stations **102₁** and **102₂** connected by way of a wet plant **104.** Landing stations **102₁** and **102₂** are typically further connected to respective terrestrial networks (not explicitly shown in FIG. 1). In an alternative embodiment, system **100** may have additional landing stations connected to wet plant **104,** as known in the pertinent art, e.g., using one or more branching units (not explicitly shown in FIG. 1).

In an example embodiment, wet plant **104** comprises an undersea cable system that includes, *inter alia,* submersible optical repeaters **150₁-150_{N}** serially connected by spans **140** of optical fiber, e.g., as indicated in FIG. 1, where N is a positive integer. In the shown embodiment, each span **140ᵢ** includes two optical fibers, which are labeled **140ᵢₐ** and **140_{ib},** respectively, where i= 1, 2, ..., N+1. The number N of optical repeaters **150** used in wet plant **104** depends on the particular embodiment and may be in the range, e.g., from 1 to -200. A typical length of a fiber span **140ᵢ** may range from -75 km to -100 km, depending on the distance between landing stations **102₁** and **102₂**.

In the shown embodiment, an optical repeater **150ⱼ** comprises optical amplifiers **160ⱼₐ** and **160_{jb},** where j=1, 2, ..., N. Optical amplifier **160ⱼₐ** is configured to amplify optical signals traveling towards landing station **102₂.** Optical amplifier **160_{jb}** is similarly configured to amplify optical signals traveling towards landing station **102₁.** In an example embodiment, an optical amplifier **160ⱼ** can be implemented as known in the pertinent art, e.g., using an erbium-doped fiber, a gain-flattening filter, and one or more laser-diode pumps. The laser diodes can be powered by a DC current from the corresponding shore-based power-feeding equipment (PFE, not explicitly shown in FIG. 1), fed through the center conductor(s) of the corresponding submarine cable, which also typically contains optical fibers **140ᵢₐ** and **140_{ib}.**

In an alternative embodiment, optical repeaters **150** can be designed for two, three, four, or more pairs of optical fibers **140ᵢ** connected thereto at each side thereof. For example, an optical repeater **150** designed to be compatible with a four-fiber-pair submarine cable typically includes eight optical amplifiers **160** arranged in four amplifier pairs, each pair being similar to optical amplifiers **160ⱼₐ** and **160_{jb}.**

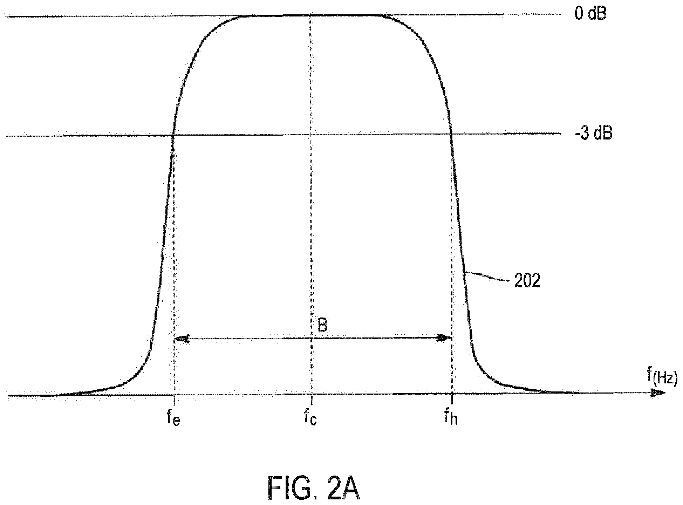

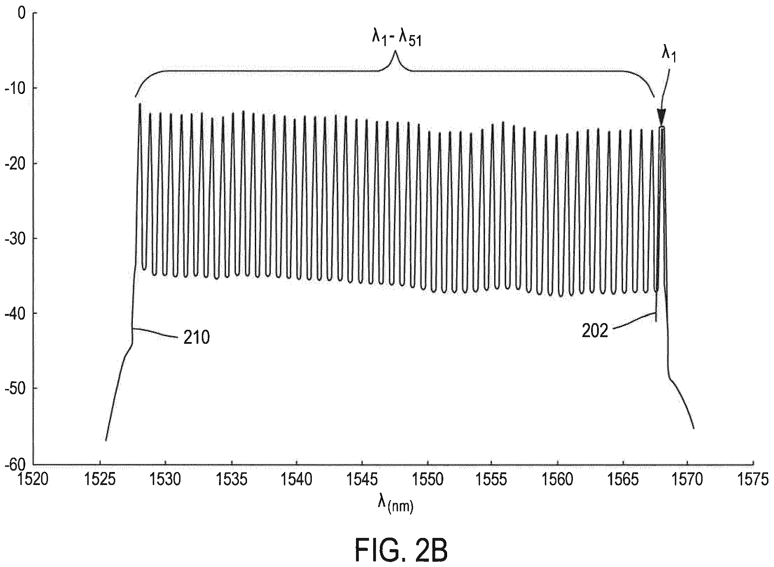

Optical repeater **150ⱼ** further comprises a supervisory optical circuit (not explicitly shown in FIG. 1) that enables monitoring equipment (ME) units **120₁** and **120₂** located at landing stations **102₁** and **102₂,** respectively, to monitor the operating status of the optical repeaters, e.g., as further described below. Example embodiments of the supervisory optical circuit that can be used in optical repeater **150ⱼ** are described in more detail below in reference to FIGs. 2-7.

In an example embodiment, each of ME units **120₁** and **120₂** is configured to use dedicated supervisory wavelengths (labeled λ₁ and λ₂) to generate respective supervisory signals that can be sent through the corresponding fiber(s) **140** towards the remote landing station **102.** The supervisory optical circuit of each optical repeater **150ⱼ** is configured to loop back, in the opposite direction, at least a portion of a supervisory signal. As a result, ME unit **120₁** can receive a looped-back supervisory signal comprising the portions of the original supervisory signal returned to that ME unit by the different supervisory optical circuits of different optical repeaters **150₁-150_{N}.** Similarly, ME unit **120₂** can receive a looped-back supervisory signal comprising the portions of the corresponding supervisory signal returned to that ME unit by the different supervisory optical circuits of different optical repeaters **150₁-150_{N}.** The looped-back supervisory signals received by ME units **120₁** and **120₂** can be processed and analyzed to determine the present operating status and/or certain operating characteristics of at least some or all of optical repeaters **150₁-150_{N}** in wet plant **104.** The determined parameters may include but are not limited to: (i) input and output signal levels and the gains of some or all individual optical amplifiers **160ⱼₐ** and **160_{jb};** (ii) non-catastrophic faults in individual optical fibers **140ᵢ,** such as any gradual loss increases therein; and (iii) catastrophic failures in individual optical repeaters **150ⱼ** and/or optical fibers **140ᵢ**.

Landing station **102₁** comprises a submarine line terminal equipment (SLTE) unit **110₁** and ME unit **120₁** connected to wet plant **104** by way of a wavelength multiplexer (MUX) **130₁** and a wavelength de-multiplexer (DMUX) **136₁** as indicated in FIG. 1. In an example embodiment, SLTE unit **110₁** includes a wavelength-division-multiplexing (WDM) transceiver (not explicitly shown in FIG. 1) configured to transmit and receive payload-carrying optical signals using carrier wavelengths λ₃-λₙ, where n generally denotes the number of WDM channels in system **100.** The number n can be in the range between ∼10 and ∼150.

As already indicated above, carrier wavelengths λ₁ and λ₂ are reserved for supervisory signals and are not used by SLTE unit **110₁** for payload transmissions. Carrier wavelengths λ₁ and λ₂ can be spectrally located at an edge of the spectral range occupied by the payload-carrying WDM channels. For example, in some embodiments, both carrier wavelengths λ₁ and λ₂ can be smaller than any of carrier wavelengths λ₃-λₙ. In some other embodiments, both carrier wavelengths λ₁ and λ₂ can be larger than any of carrier wavelengths λ₃-λₙ. In some alternative embodiments, carrier wavelength λ₁ can be smaller than any of carrier wavelengths λ₃-λₙ, and carrier wavelength λ₂ can be larger than any of carrier wavelengths λ₃-λₙ.

In an example embodiment, carrier wavelengths λ₁-λₙ can be selected in accordance with a frequency (wavelength) grid, such as a frequency grid that complies with the ITU-T G.694.1 Recommendation. The frequency grid used in system 100 can be defined, e.g., in the frequency range from about 184 THz to about 201 THz, with a 100, 50, 25, or 12.5-GHz spacing of the channels therein. While typically defined in frequency units, the parameters of the grid can equivalently be expressed in wavelength units. For example, in the wavelength range from about 1528 nm to about 1568 nm, the 100-GHz spacing between the centers of neighboring WDM channels is equivalent to approximately 0.8-nm spacing. In alternative embodiments, other fixed or flexible (flex) frequency grids can be used as well.

In operation, MUX **130₁** multiplexes the optical signals of carrier wavelengths λ₃-λₙ generated by SLTE unit **110₁** and the supervisory optical signals of carrier wavelengths λ₁ and λ₂, and applies the resulting multiplexed optical signal to optical fiber **140₁ₐ.** DMUX **136₁** demultiplexes a multiplexed optical signal received from optical fiber **140_{1b}** into two portions. The first portion has optical signals of carrier wavelengths λ₃-λₙ and is directed to SLTE unit **110₁**. The second portion has the looped-back supervisory optical signals of carrier wavelengths λ₁ and λ₂ and is directed to ME unit **120₁**.

In an example embodiment, ME unit **120₁** comprises an optical time-domain reflectometer (OTDR, not explicitly shown in FIG. 1) configured to optically probe wet plant **104** using carrier wavelengths λ₁ and λ₂. For example, ME unit **120₁** can be designed to perform OTDR measurements by detecting and processing the looped-back supervisory optical signals received from optical repeaters **150₁-150_{N}**. In general, ME unit **120₁** can be configured to use any suitable OTDR method. Some embodiments of ME unit **120₁** may benefit from the use of at least some OTDR features and/or techniques disclosed, e.g., in U.S. Patent Nos. 9,341,543, 9,310,274, 9,240,836, 9,170,173, 9,143,228, 9,042,721, 9,036,991, 9,008,503, 8,942,556, 8,837,938, 8,805,183, 8,502,964, and 8,280,253 and U.S. Patent Application Publication Nos. 2011/0216996, 2013/0216176, and 2014/0212130. The general physical principles of different types of OTDR measurements are reviewed, e.g., in Xiaoyi Bao and Liang Chen, "Recent Progress in Distributed Fiber Optic Sensors," Sensors, 2012, vol. 12, pp. 8601-8639.

Landing station **102₂** is analogous to landing station **102₁** and comprises an SLTE unit **110₂**, ME unit **120₂**, a MUX **130₂**, and a DMUX **136₂**. The analogous elements/components of the two landing stations are labeled in FIG. 1 using the same numerical labels, but with different respective subscripts. The descriptions of SLTE unit **110₁**, ME unit **120₁**, MUX **130₁**, and DMUX **136₁** of landing station **102₁** given above generally apply to SLTE unit **110₂**, ME unit **120₂,** MUX **130₂,** and DMUX **136₂,** respectively, of landing station **102₂** and are not repeated here.

In various embodiments, each of landing stations **102₁** and **102₂** may further include one or more of the following conventional elements/components: (i) power feeding equipment; (ii) system supervisory equipment; (iii) network management equipment; (iv) cable termination boxes; (v) network protection equipment; and (vi) various interface circuits.

In some embodiments, a single respective carrier wavelength can be used at each of ME units **120₁** and **120₂** to generate supervisory optical signals. In some other embodiments, more than two carrier wavelengths of the WDM set λ₁-λₙ can be allocated for supervisory functions. A person of ordinary skill in the art will understand, without undue experimentation, how to modify MUXes **130,** DMUXes **136,** and/or other pertinent system components to be compatible with such alternative WDM-channel allocations for supervisory functions.

In an example embodiment, a supervisory optical circuit of optical repeater **150ⱼ** is implemented using narrow band-pass optical filters (NBPOFs, not explicitly shown in FIG. 1, see FIGs. 2-7).

As used herein the term "narrow band-pass optical filter" refers to an optical device that passes optical frequencies (wavelengths) within a certain relatively narrow range and rejects (or strongly attenuates) optical frequencies outside that range. The bandwidth B of the narrow band-pass optical filter is much smaller than any of the carrier frequencies that are being passed therethrough. For example, a center frequency of the pass band can be -200 THz, whereas the bandwidth B can be -100 GHz, which is approximately three orders of magnitude smaller.

The planar-lightwave-circuit (PLC) technology enables telecom equipment manufacturers to produce narrow band-pass optical filters in large quantities and/or relatively inexpensively. There are many mature filter designs from which the manufacturer can choose for the intended application. In addition, a PLC-based narrow band-pass optical filter can be made tunable in a relatively straightforward manner, without an expensive and/or time-consuming redesign.

Various embodiments disclosed herein can beneficially leverage some of these and other technical features of narrow band-pass optical filters to provide a supervisory optical circuit for optical repeater **150ⱼ** that is capable of meeting and/or exceeding the operating requirements of network operator(s) and is amenable to low-cost implementation. In addition, at least some of the disclosed embodiments can beneficially provide significant flexibility in the manner in which supervisory optical circuits can be designed and/or operated.

FIGs. 2A-2B graphically illustrate certain spectral characteristics of an example narrow band-pass optical filter that can be used in the supervisory optical circuit of optical repeater **150ⱼ** according to an embodiment. More specifically, FIG. 2A graphically shows a magnitude transfer function **202** versus frequency for a narrow band-pass optical filter. FIG. 2B graphically shows the spectral alignment of transfer function **202** with a spectrum **210** of an example WDM signal that can be used in system **100.**

Referring to FIG. 2A, marked on the abscissa are (i) the center frequency f_{c} of transfer function **202** and (ii) the frequencies fₗ and fₕ of the half-power points (gain -3 dB relative to the center portion) of transfer function **202.** The bandwidth B of transfer function **202** can typically be defined as the difference between the frequencies fₕ and fₗ, although an alternative definition is also possible.

Depending on the embodiment, the bandwidth B can be, e.g., 100, 50, 25, or 12.5 GHz. Other values of the bandwidth B can also be used, as long as the selected bandwidth value is compatible with the system's WDM configuration and/or WDM-channel assignment, e.g., as further illustrated in FIG. 2B.

The center frequency f_{c} can belong to any telecom band. As known to those skilled in the pertinent art, the frequencies (wavelengths) used for optical communications are conventionally divided into several spectral bands in which optical fibers have relatively low transmission losses. For example, the spectral range between 1260 nm and 1625 nm is divided into five telecom bands that are typically referred to as O-, E-, S-, C-, and L-bands. The O-band is in the wavelength range between 1260 nm and 1360 nm. The E-band is in the wavelength range between 1360 nm and 1460 nm. The S-band is in the wavelength range between 1460 nm and 1530 nm. The C-band is in the wavelength range between 1530 nm and 1565 nm. The L-band is in the wavelength range between 1565 nm and 1625 nm.

Referring to FIG. 2B, spectrum **210** has fifty-one peaks corresponding to carrier wavelengths λ₁-λ₅₁ (i.e., n-51). Transfer function **202** is illustratively shown as being spectrally aligned with the peak corresponding to carrier wavelength λ₁, which is one of the dedicated supervisory wavelengths in system **100** (see FIG. 1). The center frequency f_{c} and bandwidth B of transfer function **202** are such that a supervisory optical signal having carrier wavelength λ₁ can pass through the corresponding narrow band-pass optical filter with little attenuation, whereas any of the optical signals having carrier wavelengths λ₂-λ₅₁ is rejected or significantly attenuated due to being outside of the bandwidth B.

A person of ordinary skill in the art will understand that a narrow band-pass optical filter corresponding to any of the additional dedicated supervisory wavelengths (e.g., λ₂, FIG. 1) can similarly be spectrally aligned with the peak corresponding to that carrier wavelength in spectrum **210.**

In an example embodiment, any of the narrow band-pass optical filters used in supervisory optical circuits disclosed herein can be implemented as a part of the corresponding planar lightwave circuit. In a typical design, such a narrow band-pass optical filter does not employ a mirror configured to reflect, in an opposite direction, light applied to the filter by the corresponding supervisory optical circuit, e.g., if the light has a carrier frequency between fₕ and fₗ (see FIG. 2A). As used herein, the term "mirror" should be construed to cover, *inter alia,* conventional broadband mirrors, wavelength-selective reflectors, and Bragg reflectors.

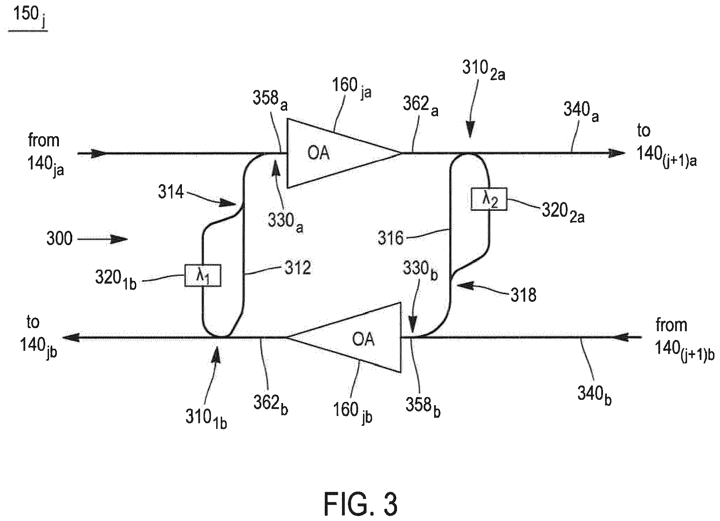

FIG. 3 shows a block diagram of an optical repeater **150ⱼ** according to an embodiment. Connections of optical repeater **150ⱼ** to optical fibers **140ⱼₐ, 140_{jb}, 140₍ⱼ₊₁₎ₐ,** and **140_{(j+1)b}** of wet plant 104 are also shown in FIG. 3 to better indicate the relationship between the optical circuits of FIGs. 1 and 3. Optical amplifier (OA) **160ⱼₐ** of optical repeater **150ⱼ** (also see FIG. 1) is located in an optical path **340ₐ** that connects optical fibers **140ⱼₐ** and **140₍ⱼ₊₁₎ₐ.** Similarly, optical amplifier (OA) **160_{jb}** of optical repeater **150ⱼ** (also see FIG. 1) is located in an optical path **340_{b}** that connects optical fibers **140_{jb}** and **140_{(j+1)b}.** Optical repeater **150ⱼ** also includes a supervisory optical circuit **300** that optically couples optical paths **340ₐ** and **340_{b}** as described in more detail below.

Circuit **300** comprises (i) two 2×2 optical couplers that are labeled in FIG. 3 as **310_{1b}** and **310₂ₐ,** respectively, and (ii) four 2×1 optical couplers that are labeled in FIG. 3 as **314, 318, 330ₐ,** and **330_{b},** respectively. Optical coupler **310₂ₐ** is located on optical path **340ₐ** at an output port **362ₐ** of optical amplifier **160ⱼₐ.** Optical coupler **310_{1b}** is located on optical path **340_{b}** at an output port **362_{b}** of optical amplifier **160_{jb}.** Optical coupler **330ₐ** is located at input port **358ₐ** of optical amplifier **160ⱼₐ.** Optical coupler **330_{b}** is located at input port **358_{b}** of optical amplifier **160_{jb}.** Optical coupler **310_{1b}** and optical coupler **330ₐ** are connected to one another by way of an optical fiber or waveguide **312.** Optical coupler **310₂ₐ** and optical coupler **330_{b}** are connected to one another by way of an optical fiber or waveguide **316.**

Optical coupler **314** is inserted into optical fiber or waveguide **312** to provide a parallel optical path between optical couplers **310_{1b}** and **330ₐ,** the parallel optical path comprising an NBPOF **320_{1b}.** The transfer function **202** of NBPOF **320_{1b}** has the center frequency f_{c} corresponding to wavelength λ₁.

Optical coupler **318** is similarly inserted into optical fiber or waveguide 316 to provide a parallel optical path between optical couplers **310₂ₐ** and **330_{b},** the parallel optical path comprising an NBPOF **320₂ₐ.** The transfer function **202** of NBPOF **320₂ₐ** has the center frequency f_{c} corresponding to wavelength λ₂.

In an example embodiment, circuit **300** can be a planar lightwave circuit or a part of a planar lightwave circuit.

In operation, circuit **300** provides the following loop-back paths for the supervisory optical signals of carrier wavelengths λ₁ and λ₂.

A portion of a supervisory optical signal of carrier wavelength λ₂ received from optical fiber **140ⱼₐ** can be looped back into optical fiber **140_{jb},** e.g., as follows. Optical path **340ₐ** directs the optical signal received through optical fiber **140ⱼₐ** to optical amplifier **160ⱼₐ,** where the latter undergoes optical amplification. The resulting amplified signal is directed from output port **362ₐ** of optical amplifier **160ⱼₐ** to optical coupler **310₂ₐ.** Optical coupler **310₂ₐ** operates to cause the coupled optical signal to be directed through NBPOF **320₂ₐ** that passes the λ₂ component thereof and essentially stops all other spectral components thereof. The filtered λ₂ component is coupled by optical coupler **318** into optical fiber **316,** which directs it to optical amplifier **160_{jb}** by way of optical coupler **330_{b}.** The resulting amplified signal of carrier wavelength λ₂ is then directed from output port **362_{b}** of optical amplifier **160_{jb}** to optical fiber **140_{jb}.**

A portion of a supervisory optical signal of carrier wavelength λ₁ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical amplifier **160_{jb},** where the latter undergoes optical amplification. The resulting amplified signal is directed from output port **362_{b}** of optical amplifier **160_{jb}** to optical coupler **310_{1b}.** Optical coupler **310_{1b}** operates to cause the coupled optical signal to be directed through NBPOF **320_{1b}** that passes the λ₁ component thereof and essentially stops all other spectral components thereof. The filtered λ₁ component is coupled by optical coupler **314** into optical fiber **312,** which directs it to optical amplifier **160ⱼₐ** by way of optical coupler **330ₐ**. The resulting amplified signal of carrier wavelength λ₁ is then directed from output port **362ₐ** of optical amplifier **160ⱼₐ** to optical fiber **140₍ⱼ₊₁₎ₐ.**

In addition, circuit **300** provides (i) an optical pathway for the backscattered light to cross from optical path **340ₐ** to optical path **340_{b}** and (ii) an optical pathway for the backscattered light to cross from optical path **340_{b}** to optical path **340ₐ**, both of these optical pathways being configured to bypass NBPOFs **320_{1b}** and **320₂ₐ.** As such, each of the latter optical pathways can be used to direct back to the corresponding one of landing stations **102₁** and **102₂** the backscattered light by way of the optical path having the optical amplifiers **160** that are directionally aligned with the propagation direction of the backscattered light. The backscattered light so directed can be of any suitable wavelength, e.g., have one of carrier wavelengths λ₃-λₙ or any out-of-band wavelength, such as a wavelength corresponding to a different telecom band than that of wavelengths λ₁-λₙ.

For example, optical fiber or waveguide **316** is configured to direct backscattered light received from optical fiber **140₍ⱼ₊₁₎ₐ** to input port **358_{b}** of optical amplifier **160_{jb}** such that the received backscattered light bypasses NBPOF **320₂ₐ.** Optical fiber or waveguide **312** is similarly configured to direct backscattered light received from optical fiber **140_{jb}** to input port **358ₐ** of optical amplifier **160ⱼₐ** such that the received backscattered light bypasses NBPOF **320_{1b}.** A person of ordinary skill in the art will understand that the capability for efficiently channeling the backscattered light towards the source of the original optical signal that is being backscattered can advantageously be used, e.g., to expand the monitoring capabilities of landing stations **102₁** and **102₂** beyond the above-described capabilities of ME units **120.**

As known in the pertinent art, the backscattered light can be generated by a number of physical mechanisms, such as (i) a catastrophic defect in the optical fiber; (ii) a relatively large temperature gradient along the length of the optical fiber; (iii) a non-catastrophic defect that might be caused by sheering, stressing, shaking, and/or excessive bending of the optical fiber; etc.

Example optical-link monitoring (OLM) functions that can be implemented using the backscattered light channeled through optical fibers or waveguides **312** and **316** can be based on one or more of the following approaches.

In some embodiments, a landing station **102** can be designed and configured to perform OTDR measurements in a normal operating mode, e.g., by detecting and processing reflected and/or backscattered optical signals having carrier wavelengths λ₃-λₙ. Alternatively or in addition, a landing station **102** can be designed and configured to perform OTDR measurements in a special OLM operating mode, during which the corresponding transceiver generates and applies to wet plant **104** a modulated optical signal with a waveform that facilitates OTDR measurements, e.g., in terms of providing a higher signal-to-noise ratio (SNR) and/or a better spatial resolution for OTDR measurements than those technically achievable with payload-carrying optical signals. Transmission of payload data may be temporarily halted while landing station **102** is in the OLM operating mode and may be resumed when the corresponding transceiver is switched back to the normal operating mode.

In different embodiments, the above-mentioned OLM functions can be based on different types of OTDR measurements. For example, in one possible embodiment, landing station **102** can be designed and configured to perform OTDR measurements by detecting and processing the elastically reflected light and/or backscattered light produced due to Rayleigh scattering in wet plant **104.** In another possible embodiment, landing station **102** can be designed and configured to perform OTDR measurements by detecting and processing the backscattered light produced due to Brillouin scattering in wet plant **104.** In yet another possible embodiment, landing station **102** can be designed and configured to perform OTDR measurements by detecting and processing the backscattered light produced due to Raman scattering in wet plant **104.** These and other embodiments may benefit from the use of at least some OTDR features and/or techniques disclosed in the above-cited U.S. Patent Nos. 9,341,543, 9,310,274, 9,240,836, 9,170,173, 9,143,228, 9,042,721, 9,036,991, 9,008,503, 8,942,556, 8,837,938, 8,805,183, 8,502,964, and 8,280,253 and U.S. Patent Application Publication Nos. 2011/0216996, 2013/0216176, and 2014/0212130.

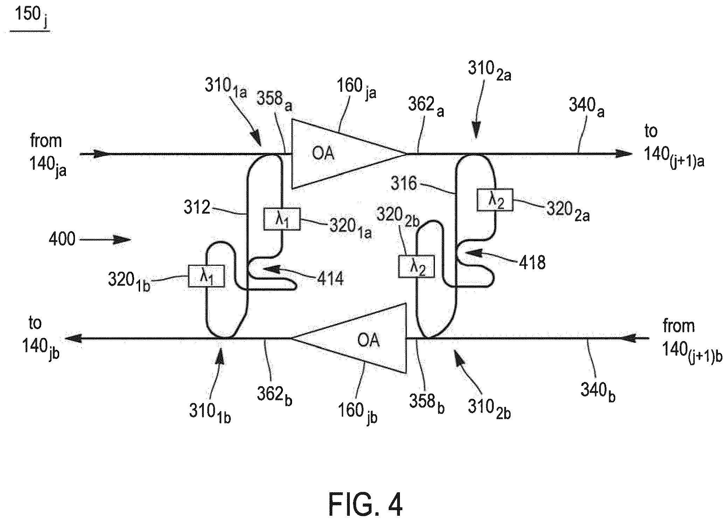

FIG. 4 shows a block diagram of an optical repeater **150ⱼ** according to another embodiment. Connections of optical repeater **150ⱼ** to optical fibers **140ⱼₐ, 140_{jb}, 140₍ⱼ₊₁₎ₐ,** and **140_{(j+1)b}** of wet plant **104** are also shown in FIG. 4 to better indicate the relationship between the optical circuits of FIGs. 1 and 4.

The embodiment of optical repeater **150ⱼ** shown in FIG. 4 is generally similar to the embodiment of optical repeater **150ⱼ** shown in FIG. 3, and the two embodiments use many of the same components, which are labeled in FIGs. 3 and 4 using the same labels. These components are already described above in reference to FIG. 3, and their description is not repeated here. Instead, the description given below primarily focuses on the differences between the embodiments of FIGs. 3 and 4.

In the embodiment of optical repeater **150ⱼ** shown in FIG. 4, supervisory optical circuit **300** is replaced by a supervisory optical circuit **400.** Circuit **400** differs from circuit **300** as follows:
(i) 2×1 optical couplers **330ₐ** and **310_{b}** are replaced by 2×2 optical couplers **310₁ₐ** and **310_{2b},** respectively;
(ii) 2×1 optical couplers **314** and **318** are replaced by 2×2 optical couplers **414** and **418,** respectively; and
(iii) NBPOFs **320_{2b}** and **320₁ₐ** are added and connected as indicated in FIG. 4.
In an example embodiment, the added NBPOFs **320_{2b}** and **320₁ₐ** can be nominal copies of NBPOFs **320₂ₐ** and **320_{1b},** respectively.

In operation, circuit **400** provides the following loop-back paths for the supervisory optical signals of carrier wavelengths λ₁ and λ₂.

A portion of a supervisory optical signal of carrier wavelength λ₁ received from optical fiber **140ⱼₐ** can be looped back into optical fiber **140_{jb},** e.g., as follows. Optical path **340ₐ** directs the optical signal received through optical fiber **140ⱼₐ** to optical coupler **310₁ₐ.** Optical coupler **310₁ₐ** operates to cause the coupled optical signal to be directed through NBPOF **320₁ₐ** that passes the λ₁ component thereof and essentially stops all other spectral components thereof. The filtered λ₁ component is coupled by optical coupler **414** into optical fiber **312,** which directs it to optical fiber **140_{jb}** by way of optical coupler **310_{1b}.**

A portion of a supervisory optical signal of carrier wavelength λ₂ received from optical fiber **140ⱼₐ** can be looped back into optical fiber **140_{jb},** e.g., as follows. Optical path **340ₐ** directs the optical signal received through optical fiber **140ⱼₐ** to optical amplifier **160ⱼₐ,** where the latter undergoes optical amplification. The resulting amplified signal is directed from output port **362ₐ** of optical amplifier **160ⱼₐ** to optical coupler **310₂ₐ.** Optical coupler **310₂ₐ** operates to cause the coupled optical signal to be directed through NBPOF **320₂ₐ** that passes the λ₂ component thereof and essentially stops all other spectral components thereof. The filtered λ₂ component is coupled by optical coupler **418** into optical fiber **316,** which directs it to optical amplifier **160_{jb}** by way of optical coupler **310_{2b}.** The resulting amplified signal of carrier wavelength λ₂ is then directed from output port **362_{b}** of optical amplifier **160_{jb}** to optical fiber **140_{jb}.**

A portion of a supervisory optical signal of carrier wavelength λ₂ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical coupler **310_{2b}.** Optical coupler **310_{2b}** operates to cause the coupled optical signal to be directed through NBPOF **320_{2b}** that passes the λ₂ component thereof and essentially stops all other spectral components thereof. The filtered λ₂ component is coupled by optical coupler **418** into optical fiber **316,** which directs it to optical fiber **140₍ⱼ₊₁₎ₐ** by way of optical coupler **310₂ₐ.**

A portion of a supervisory optical signal of carrier wavelength λ₁ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical amplifier **160_{jb},** where the latter undergoes optical amplification. The resulting amplified signal is directed from output port **362_{b}** of optical amplifier **160_{jb}** to optical coupler **310_{1b}.** Optical coupler **310_{1b}** operates to cause the coupled optical signal to be directed through NBPOF **320_{1b}** that passes the λ₁ component thereof and essentially stops all other spectral components thereof. The filtered λ₁ component is coupled by optical coupler **414** into optical fiber **312,** which directs it to optical amplifier **160ⱼₐ** by way of optical coupler **310₁ₐ.** The resulting amplified signal of carrier wavelength λ₁ is then directed from output port **362ₐ** of optical amplifier **160ⱼₐ** to optical fiber **140₍ⱼ₊₁₎ₐ.**

In addition, circuit **400** provides the same optical pathways for the backscattered light as circuit **300,** by way of optical fibers or waveguides **312** and **316.**

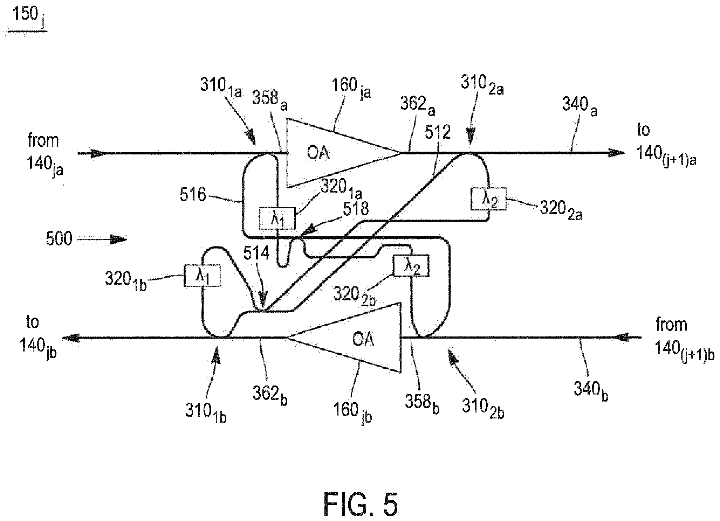

FIG. 5 shows a block diagram of an optical repeater **150ⱼ** according to yet another embodiment. Connections of optical repeater **150ⱼ** to optical fibers **140ⱼₐ, 140_{jb}, 140₍ⱼ₊₁₎ₐ,** and **140_{(j+1)b}** of wet plant **104** are also shown in FIG. 5 to better indicate the relationship between the optical circuits of FIGs. 1 and 5.

In the embodiment of optical repeater **150ⱼ** shown in FIG. 5, supervisory optical circuit **400** is replaced by a supervisory optical circuit **500.** Circuit **500** can be obtained by modifying circuit **400** as follows:
(i) removing optical couplers **414** and **418;**
(ii) removing optical fibers **312** and **316;** and
(iii) reconnecting optical couplers **310₁ₐ, 310_{1b}, 310₂ₐ,** and **310_{2b}** and NBPOFs **320₁ₐ, 320_{1b}, 320₂ₐ,** and **320_{2b}** using optical fibers or waveguides **512** and **516,** and 2×2 optical couplers **514** and **518,** as indicated in FIG. 5.
The resulting structure of circuit **500** provides the following supervisory optical paths: (i) a path between input ports **358ₐ** and **358_{b},** with the wavelengths λ₁ and λ₂ being used in this path to carry signals in respective opposite directions; and (ii) a path between output ports **362ₐ** and **362_{b},** with the wavelengths λ₁ and λ₂ similarly being used in this path to carry signals in respective opposite directions.

In operation, circuit **500** provides the following loop-back paths for the supervisory optical signals of carrier wavelengths λ₁ and λ₂.

A portion of a supervisory optical signal of carrier wavelength λ₁ received from optical fiber **140ⱼₐ** can be looped back into optical fiber **140_{jb},** e.g., as follows. Optical path **340ₐ** directs the optical signal received through optical fiber **140ⱼₐ** to optical coupler **310₁ₐ.** Optical coupler **310₁ₐ** operates to cause the coupled optical signal to be directed through NBPOF **320₁ₐ** that passes the λ₁ component thereof and essentially stops all other spectral components thereof. The filtered λ₁ component is coupled by optical coupler **518** into optical fiber **516,** which directs it to input port **358_{b}** of optical amplifier **160_{jb}** by way of optical coupler **310_{2b}.** The resulting amplified signal of carrier wavelength λ₁ is then directed from output port **362_{b}** of optical amplifier **160_{jb}** to optical fiber **140_{jb}.**

A portion of a supervisory optical signal of carrier wavelength λ₂ received from optical fiber **140ⱼₐ** can be looped back into optical fiber **140_{jb},** e.g., as follows. Optical path **340ₐ** directs the optical signal received through optical fiber **140ⱼₐ** to optical amplifier **160ⱼₐ,** where the latter undergoes optical amplification. The resulting amplified signal is directed from output port **362ₐ** of optical amplifier **160ⱼₐ** to optical coupler **310₂ₐ.** Optical coupler **310₂ₐ** operates to cause the coupled optical signal to be directed through NBPOF **320₂ₐ** that passes the λ₂ component thereof and essentially stops all other spectral components thereof. The filtered λ₂ component is coupled by optical coupler **514** into optical fiber **512,** which directs it to optical fiber **140_{jb}** by way of optical coupler **310_{1b}.**

A portion of a supervisory optical signal of carrier wavelength λ₂ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical coupler **310_{2b}.** Optical coupler **310_{2b}** operates to cause the coupled optical signal to be directed through NBPOF **320_{2b}** that passes the λ₂ component thereof and essentially stops all other spectral components thereof. The filtered λ₂ component is coupled by optical coupler **518** into optical fiber **516,** which directs it to input port **358ₐ** of optical amplifier **160ⱼₐ** by way of optical coupler **310₁ₐ.** The resulting amplified signal of carrier wavelength λ₂ is then directed from output port **362ₐ** of optical amplifier **160ⱼₐ** to optical fiber **140₍ⱼ₊₁₎ₐ.**

A portion of a supervisory optical signal of carrier wavelength λ₁ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical amplifier **160_{jb},** where the latter undergoes optical amplification. The resulting amplified signal is directed from output port **362_{b}** of optical amplifier **160_{jb}** to optical coupler **310_{1b}.** Optical coupler **310_{1b}** operates to cause the coupled optical signal to be directed through NBPOF **320_{1b}** that passes the λ₁ component thereof and essentially stops all other spectral components thereof. The filtered λ₁ component is coupled by optical coupler **514** into optical fiber **512,** which directs it to optical fiber **140₍ⱼ₊₁₎ₐ** by way of optical coupler **310₂ₐ.**

In addition, circuit **500** provides (i) an optical pathway, by way of optical fiber or waveguide **512,** for the backscattered light to cross from optical path **340ₐ** to optical path **340_{b}** and (ii) an optical pathway, by way of optical fiber or waveguide **512,** for the backscattered light to cross from optical path **340_{b}** to optical path **340ₐ**, both of the latter optical pathways being configured to bypass NBPOFs **320₁ₐ, 320_{1b}, 320₂ₐ,** and **320_{2b}.**

In some embodiments, circuit **500** can be modified by removing the supervisory optical path between input ports **358ₐ** and **358_{b}.** In some other embodiments, circuit **500** can be modified by removing the supervisory optical path between output ports **362ₐ** and **362ₕ.**

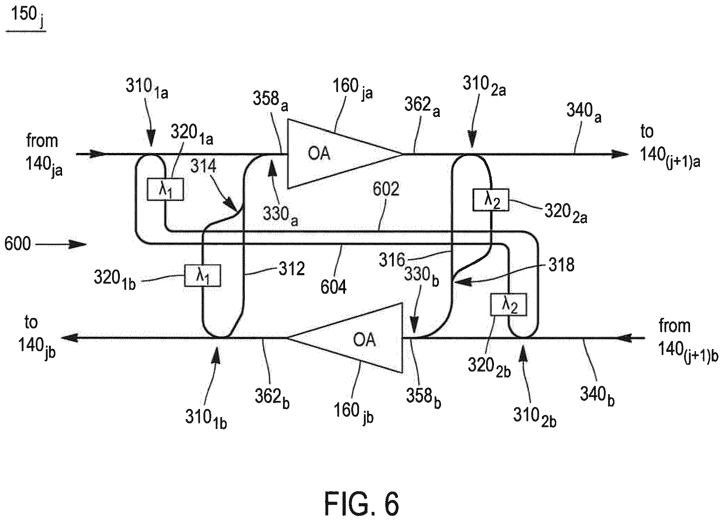

FIG. 6 shows a block diagram of an optical repeater **150ⱼ** according to yet another embodiment. Connections of optical repeater **150ⱼ** to optical fibers **140ⱼₐ, 140_{jb}, 140₍ⱼ₊₁₎ₐ,** and **140_{(j+1)b}** of wet plant **104** are also shown in FIG. 6 to better indicate the relationship between the optical circuits of FIGs. 1 and 6.

In the embodiment of optical repeater **150ⱼ** shown in FIG. 6, supervisory optical circuit **300** (FIG. 3) is replaced by a supervisory optical circuit **600.** Circuit **600** can be obtained by adding to circuit **300** a supervisory optical path between input ports **358ₐ** and **358_{b}.** The added supervisory optical path comprises: (i) optical couplers **310₁ₐ** and **310_{2b};** and (ii) optical fibers or waveguides **602** and **604,** all connected as indicated in FIG. 6. The added supervisory optical path is configured to use the wavelengths λ₁ and λ₂ to carry signals in respective opposite directions.

In operation, circuit **600** provides the following loop-back paths for the supervisory optical signals of carrier wavelengths λ₁ and λ₂.

A portion of a supervisory optical signal of carrier wavelength λ₁ received from optical fiber **140ⱼₐ** can be looped back into optical fiber **140_{jb},** e.g., as follows. Optical path **340ₐ** directs the optical signal received through optical fiber **140ⱼₐ** to optical coupler **310₁ₐ.** Optical coupler **310₁ₐ** operates to cause the coupled optical signal to be directed through NBPOF **320₁ₐ** that passes the λ₁ component thereof and essentially stops all other spectral components thereof. The filtered λ₁ component is directed by optical fiber **602** to optical coupler **310_{2b},** which further directs it to input port **358_{b}** of optical amplifier **160_{jb}.** The resulting amplified signal of carrier wavelength λ₁ is then directed from output port **362_{b}** of optical amplifier **160_{jb}** to optical fiber **140_{jb}.**

A portion of a supervisory optical signal of carrier wavelength λ₂ received from optical fiber **140ⱼₐ** can be looped back into optical fiber **140_{jb},** e.g., as follows. Optical path **340ₐ** directs the optical signal received through optical fiber **140ⱼₐ** to optical amplifier **160ⱼₐ,** where the latter undergoes optical amplification. The resulting amplified signal is directed from output port **362ₐ** of optical amplifier **160ⱼₐ** to optical coupler **310₂ₐ.** Optical coupler **310₂ₐ** operates to cause the coupled optical signal to be directed through NBPOF **320₂ₐ** that passes the λ₂ component thereof and essentially stops all other spectral components thereof. The filtered λ₂ component is coupled by optical coupler **318** into optical fiber **316,** which directs it to optical amplifier **160_{jb}** by way of optical coupler **330_{b}.** The resulting amplified signal of carrier wavelength λ₂ is then directed from output port **362_{b}** of optical amplifier **160_{jb}** to optical fiber **140_{jb}.**

A portion of a supervisory optical signal of carrier wavelength λ₁ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical amplifier **160_{jb},** where the latter undergoes optical amplification. The resulting amplified signal is directed from output port **362_{b}** of optical amplifier **160_{jb}** to optical coupler **310_{1b}.** Optical coupler **310_{1b}** operates to cause the coupled optical signal to be directed through NBPOF **320_{1b}** that passes the λ₁ component thereof and essentially stops all other spectral components thereof. The filtered λ₁ component is coupled by optical coupler **314** into optical fiber **312,** which directs it to optical amplifier **160ⱼₐ** by way of optical coupler **330ₐ.** The resulting amplified signal of carrier wavelength λ₁ is then directed from output port **362ₐ** of optical amplifier **160ⱼₐ** to optical fiber **140₍ⱼ₊₁₎ₐ.**

A portion of a supervisory optical signal of carrier wavelength λ₂ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical coupler **310_{2b}.** Optical coupler **310_{2b}** operates to cause the coupled optical signal to be directed through NBPOF **320_{2b}** that passes the λ₂ component thereof and essentially stops all other spectral components thereof. The filtered λ₂ component is directed by optical fiber **604** to optical coupler **310₁ₐ,** which further directs it to input port **358ₐ** of optical amplifier **160ⱼₐ.** The resulting amplified signal of carrier wavelength λ₂ is then directed from output port **362ₐ** of optical amplifier **160ⱼₐ** to optical fiber **140₍ⱼ₊₁₎ₐ.**

In addition, circuit **600** provides the same optical pathways for the backscattered light as circuit **300,** by way of optical fibers or waveguides **312** and **316.**

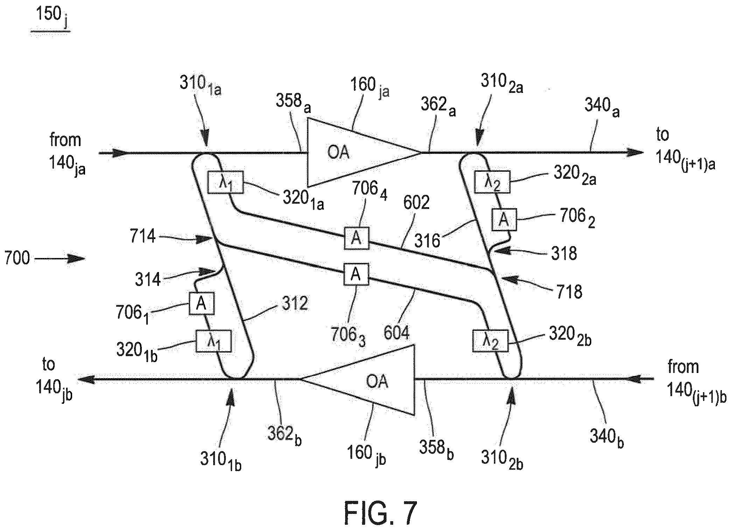

FIG. 7 shows a block diagram of an optical repeater **150ⱼ** according to yet another embodiment. Connections of optical repeater **150ⱼ** to optical fibers **140ⱼₐ, 140_{jb}, 140₍ⱼ₊₁₎ₐ,** and **140_{(j+1)b}** of wet plant **104** are also shown in FIG. 7 to better indicate the relationship between the optical circuits of FIGs. 1 and 7.

In the embodiment of optical repeater **150ⱼ** shown in FIG. 7, supervisory optical circuit **600** (FIG. 6) is replaced by a supervisory optical circuit **700.** Circuit **700** differs from circuit **600** as follows:
(i) optical couplers **330ₐ** and **330_{b}** are removed;
(ii) NBPOF **320_{1b}** and optical fiber **312** are connected to optical coupler **310₁ₐ** by way of a 2×1 optical coupler **714** that is inserted into optical fiber **604** as indicated in FIG. 7; and
(iii) NBPOF **320₂ₐ** and optical fiber **316** are connected to optical coupler **310_{2b}** by way of a 2×1 optical coupler **718** that is inserted into optical fiber **602** as further indicated in FIG. 7.

Also shown in FIG. 7 are optional optical attenuators **706₁-706₄.** Optical attenuator **706₁** is inserted between NBPOF **320_{1b}** and optical coupler **314.** Optical attenuator **706₂** is inserted between NBPOF **320_{1b}** and optical coupler **314.** Optical attenuator **706₃** is inserted into optical fiber **604** between optical coupler **310₁ₐ** and optical coupler **714.** Optical attenuator **706₄** is inserted into optical fiber **602** between optical coupler **310_{2b}** and optical coupler **718.**

Optical attenuators **706₁-706₄** may be used in some embodiments to prevent spontaneous light generation in the "ring laser" that may be formed and become active due to the presence of output-to-input optical paths between optical amplifiers **160ⱼₐ** and **160ⱼₐ** provided by circuit **700.** A person of ordinary skill in the art will understand that such spontaneous light generation may render optical repeater **150ⱼ** unusable, e.g., due to the high noise level caused thereby. The use of these and possibly other optional elements for the indicated purpose is not limited to the embodiment of optical repeater **150ⱼ** shown in FIG. 7 and, if necessary, may similarly be implemented in the embodiments of optical repeater **150ⱼ** shown in FIGs. 3-6.

In operation circuit **700** provides the following loop-back paths for the supervisory optical signals of carrier wavelengths λ₁ and λ₂. For brevity, the description of these loop-back paths is given for an embodiment of circuit **700** in which optional optical attenuators **706₁-706₄** are not present.

A portion of a supervisory optical signal of carrier wavelength λ₁ received from optical fiber **140ⱼₐ** can be looped back into optical fiber **140_{jb},** e.g., as follows. Optical path **340ₐ** directs the optical signal received through optical fiber **140ⱼₐ** to optical coupler **310₁ₐ.** Optical coupler **310₁ₐ** operates to cause the coupled optical signal to be directed through NBPOF **320₁ₐ** that passes the λ₁ component thereof and essentially stops all other spectral components thereof. The filtered λ₁ component is directed by optical fiber **602,** by way of optical coupler **718,** to optical coupler **310_{2b},** which further directs it to input port **358_{b}** of optical amplifier **160_{jb}.** The resulting amplified signal of carrier wavelength λ₁ is then directed from output port **362_{b}** of optical amplifier **160_{jb}** to optical fiber **140_{jb}.**

A portion of a supervisory optical signal of carrier wavelength λ₂ received from optical fiber **140ⱼₐ** can be looped back into optical fiber **140_{jb},** e.g., as follows. Optical path **340ₐ** directs the optical signal received through optical fiber **140ⱼₐ** to optical amplifier **160ⱼₐ,** where the latter undergoes optical amplification. The resulting amplified signal is directed from output port **362ₐ** of optical amplifier **160ⱼₐ** to optical coupler **310₂ₐ.** Optical coupler **310₂ₐ** operates to cause the coupled optical signal to be directed through NBPOF **320₂ₐ** that passes the λ₂ component thereof and essentially stops all other spectral components thereof. The filtered λ₂ component is coupled by optical couplers **318** and **718** into optical fiber **602,** which directs it to optical amplifier **160_{jb}** by way of optical coupler **310_{2b}.** The resulting amplified signal of carrier wavelength λ₂ is then directed from output port **362_{b}** of optical amplifier **160_{jb}** to optical fiber **140_{jb}.**

A portion of a supervisory optical signal of carrier wavelength λ₁ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical amplifier **160_{jb},** where the latter undergoes optical amplification. The resulting amplified signal is directed from output port **362_{b}** of optical amplifier **160_{jb}** to optical coupler **310_{1b}.** Optical coupler **310_{1b}** operates to cause the coupled optical signal to be directed through NBPOF **320_{1b}** that passes the λ₁ component thereof and essentially stops all other spectral components thereof. The filtered λ₁ component is coupled by optical couplers **314** and **714** into optical fiber **604,** which directs it to optical amplifier **160ⱼₐ** by way of optical coupler **310₁ₐ.** The resulting amplified signal of carrier wavelength λ₁ is then directed from output port **362ₐ** of optical amplifier **160ⱼₐ** to optical fiber **140₍ⱼ₊₁₎ₐ.**

A portion of a supervisory optical signal of carrier wavelength λ₂ received from optical fiber **140_{(j+1)b}** can be looped back into optical fiber **140₍ⱼ₊₁₎ₐ,** e.g., as follows. Optical path **340_{b}** directs the optical signal received through optical fiber **140_{(j+1)b}** to optical coupler **310_{2b}.** Optical coupler **310_{2b}** operates to cause the coupled optical signal to be directed through NBPOF **320_{2b}** that passes the λ₂ component thereof and essentially stops all other spectral components thereof. The filtered λ₂ component is directed by optical fiber **604,** by way of optical coupler **714,** to optical coupler **310₁ₐ,** which further directs it to input port **358ₐ** of optical amplifier **160ⱼₐ.** The resulting amplified signal of carrier wavelength λ₂ is then directed from output port **362ₐ** of optical amplifier **160ⱼₐ** to optical fiber **140₍ⱼ₊₁₎ₐ.**

In addition, circuit **700** provides substantially the same optical pathways tor the backscattered light as circuit **600,** by way of optical fibers or waveguides **312** and **316,** which are merged with optical fibers or waveguides **604** and **602,** respectively.

According to an example embodiment disclosed above in reference to FIGs. 1-7, provided is an apparatus (e.g., **100,** FIG. 1) comprising: a first optical amplifier (e.g., **160ⱼₐ,** FIG. 1) located in a first optical path (e.g., **340ₐ**, FIGs. 3-7) and configured to amplify optical signals transmitted in a first direction; a second optical amplifier (e.g., **160_{jb},** FIG. 1) located in a second optical path (e.g., **340_{b},** FIGs. 3-7) and configured to amplify optical signals transmitted in a second direction, the second direction being opposite to the first direction; and an optical circuit (e.g., **300,** FIG. 3; **500,** FIG. 5) connected to optically couple an optical output port (e.g., **362ₐ,** FIG. 3) of the first optical amplifier and a first optical port (e.g., **358_{b}** or **362_{b},** FIGs. 3, 5) of the second optical amplifier; and wherein an optical connection, through the optical circuit, between the optical output port of the first optical amplifier and the first optical port of the second optical amplifier comprises: a first optical pathway (e.g., through **320₂ₐ,** FIG. 3 or 5) configured to direct light traveling in the first direction at the optical output port of the first optical amplifier to the first optical port of the second optical amplifier in a manner that causes the light so directed to travel in the second direction at the first optical port of the second optical amplifier; and a second optical pathway (e.g., **316,** FIG. 3; **512,** FIG. 5) configured to direct light traveling in the second direction at the optical output port of the first optical amplifier to the first optical port of the second optical amplifier in a manner that causes the light so directed to travel in the second direction at the first optical port of the second optical amplifier; wherein the first optical pathway includes a first narrow band-pass optical filter (e.g., **320₂ₐ,** FIG. 3, 5) located therein; and wherein the second optical pathway is configured to bypass the first narrow band-pass optical filter.

In some embodiments of the above apparatus, the first optical port is an input port (e.g., **358_{b},** FIG. 3) of the second optical amplifier.

In some embodiments of any of the above apparatus, the first optical port is an output port (e.g., **362_{b},** FIG. 5) of the second optical amplifier.

In some embodiments of any of the above apparatus, the optical connection, through the optical circuit, between the optical output port of the first optical amplifier and the first optical port of the second optical amplifier further comprises a third optical pathway (e.g., through **320_{2b},** FIG. 4; or through **320_{1b},** FIG. 5) configured to direct light traveling in the second direction at the first optical port of the second optical amplifier to the optical output port of the first optical amplifier in a manner that causes the light so directed to travel in the first direction at the optical output port of the first optical amplifier; and wherein the third optical pathway includes a second narrow band-pass optical filter (e.g., **320_{2b},** FIG. 4; or **320_{1b},** FIG. 5) located therein.

In some embodiments of any of the above apparatus, the second optical pathway is configured to bypass the second narrow band-pass optical filter.

In some embodiments of any of the above apparatus, the first optical port is an input port (e.g., **358_{b},** FIG. 4) of the second optical amplifier.

In some embodiments of any of the above apparatus, the first optical port is an output port (e.g., **362_{b},** FIG. 5) of the second optical amplifier.

In some embodiments of any of the above apparatus, the first narrow band-pass optical filter has a transfer function (e.g., **202,** FIG. 2) that causes the first narrow band-pass optical filter to pass a first wavelength (e.g., λ₂, FIG. 5) and reject a second wavelength (e.g., λ₁, FIG. 5); and wherein the second narrow band-pass optical filter has a transfer function (e.g., **202,** FIG. 2) that causes the second narrow band-pass optical filter to pass the second wavelength and reject the first wavelength.

In some embodiments of any of the above apparatus, each of the first and second optical amplifiers is configured to amplify a respective WDM signal transmitted therethrough, the respective WDM signal configured to include a plurality of spectral components, each of the spectral components having a respective wavelength (e.g., λ₃-λₙ, FIG. 1) different from the first and second wavelengths; and wherein the first wavelength, the second wavelength, and the respective wavelengths are spectrally arranged in accordance with a wavelength grid.

In some embodiments of any of the above apparatus, the second narrow band-pass optical filter (e.g., **320_{2b},** FIG. 4) is a nominal copy of the first narrow band-pass optical filter (e.g., **320₂ₐ,** FIG. 4).

In some embodiments of any of the above apparatus, the optical circuit is further connected to optically couple an optical input port (e.g., **358ₐ,** FIG. 3) of the first optical amplifier and a second optical port (e.g., **362_{b}** or **358_{b},** FIGs. 3, 5) of the second optical amplifier; and wherein an optical connection, through the optical circuit, between the optical input port of the first optical amplifier and the second optical port of the second optical amplifier comprises: a third optical pathway (e.g., through **320_{1b},** FIG. 3) configured to direct light traveling in the second direction at the second optical port of the second optical amplifier to the optical input port of the first optical amplifier in a manner that causes the light so directed to travel in the first direction at the optical input port of the first optical amplifier; and a fourth optical pathway (e.g., **312,** FIG. 3; **516,** FIG. 5) configured to direct light traveling in the first direction at the second optical port of the second optical amplifier to the optical input port of the first optical amplifier in a manner that causes the light so directed to travel in the first direction at the optical input port of the first optical amplifier; wherein the third optical pathway includes a second narrow band-pass optical filter (e.g., **320_{1b},** FIG. 3) located therein; and wherein the fourth optical pathway is configured to bypass the second narrow band-pass optical filter.

In some embodiments of any of the above apparatus, the first optical port is an input port (e.g., **358_{b},** FIG. 3) of the second optical amplifier; and wherein the second optical port is an output port (e.g., **362_{b},** FIG. 3) of the second optical amplifier.

In some embodiments of any of the above apparatus, the first optical port is an output port (e.g., **362_{b},** FIG. 5) of the second optical amplifier; and wherein the second optical port is an input port (e.g., **358_{b},** FIG. 5) of the second optical amplifier.

In some embodiments of any of the above apparatus, the first narrow band-pass optical filter has a transfer function (e.g., **202,** FIG. 2) that causes the first narrow band-pass optical filter to pass a first wavelength (e.g., λ₂, FIG. 3) and reject a second wavelength (e.g., λ₁, FIG. 3); and wherein the second narrow band-pass optical filter has a transfer function (e.g., **202,** FIG. 2) that causes the second narrow band-pass optical filter to pass the second wavelength and reject the first wavelength.

In some embodiments of any of the above apparatus, the optical connection, through the optical circuit, between the optical output port of the first optical amplifier and the first optical port of the second optical amplifier further comprises a fifth optical pathway (e.g., through **320_{2b},** FIG. 4) configured to direct light traveling in the second direction at the first optical port of the second optical amplifier to the optical output port of the first optical amplifier in a manner that causes the light so directed to travel in the first direction at the optical output port of the first optical amplifier; and wherein the fifth optical pathway includes a third narrow band-pass optical filter (e.g., **320_{2b},** FIG. 4) located therein.

In some embodiments of any of the above apparatus, the first narrow band-pass optical filter has a transfer function (e.g., **202,** FIG. 2) that causes the first narrow band-pass optical filter to pass a first wavelength (e.g., λ₂, FIG. 3) and reject a second wavelength (e.g., λ₁, FIG. 3); wherein the second narrow band-pass optical filter has a transfer function (e.g., **202,** FIG. 2) that causes the second narrow band-pass optical filter to pass the second wavelength and reject the first wavelength; and wherein the third narrow band-pass optical filter (e.g., **320_{2b},** FIG. 4) is a nominal copy of the first narrow band-pass optical filter (e.g., **320₂ₐ,** FIG. 4).

In some embodiments of any of the above apparatus, the optical connection, through the optical circuit, between the optical input port of the first optical amplifier and the second optical port of the second optical amplifier further comprises a sixth optical pathway (e.g., through **320₁ₐ,** FIG. 4) configured to direct light traveling in the first direction at the optical in port of the first optical amplifier to the second optical port of the second optical amplifier in a manner that causes the light so directed to travel in the second direction at the second optical port of the second optical amplifier; and wherein the sixth optical pathway includes a fourth narrow band-pass optical filter (e.g., **320₁ₐ,** FIG. 4) located therein.

In some embodiments of any of the above apparatus, the first narrow band-pass optical filter has a transfer function (e.g., **202,** FIG. 2) that causes the first narrow band-pass optical filter to pass a first wavelength (e.g., λ₂, FIG. 3) and reject a second wavelength (e.g., λ₁, FIG. 3); wherein the second narrow band-pass optical filter has a transfer function (e.g., **202,** FIG. 2) that causes the second narrow band-pass optical filter to pass the second wavelength and reject the first wavelength; wherein the third narrow band-pass optical filter (e.g., **320_{2b},** FIG. 4) is a nominal copy of the first narrow band-pass optical filter (e.g., **320₂ₐ,** FIG. 4); and wherein the fourth narrow band-pass optical filter (e.g., **320₁ₐ,** FIG. 4) is a nominal copy of the second narrow band-pass optical filter (e.g., **320_{1b},** FIG. 4).

In some embodiments of any of the above apparatus, the first narrow band-pass optical filter has a transfer function (e.g., **202,** FIG. 2) characterized by a bandwidth (e.g., B, FIG. 2A); and wherein the first narrow band-pass optical filter does not employ a mirror configured to reflect in an opposite direction light applied thereto by the first optical pathway, the light being spectrally located within the bandwidth.

In some embodiments of any of the above apparatus, the apparatus comprises a planar lightwave circuit (e.g., **300,** FIG. 3), wherein the first narrow band-pass optical filter is a part of the planar lightwave circuit.

While this disclosure includes references to illustrative embodiments, this specification is not intended to be construed in a limiting sense.

For example, although various embodiments are described above in reference to wet plant **104** and submersible optical repeaters **150,** the invention is not so limited. From the provided description, a person of ordinary skill in the art will understand how to make and use embodiments that are suitable for use in a terrestrial optical network, wherein at least one optical repeater **150** is located in a remote or difficult-to-access area that is not necessarily under water.

Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

## Claims

1. An apparatus comprising:
a first optical amplifier (160ⱼₐ) located in a first optical path (340ₐ) and configured to amplify optical signals transmitted in a first direction;
a second optical amplifier (160_{jb}) located in a second optical path (340_{b}) and configured to amplify optical signals transmitted in a second direction, the second direction being opposite to the first direction; and
an optical circuit (300,400,500,600,700) connected to optically couple an optical output port (362ₐ) of the first optical amplifier and a first optical port (358_{b},362ₐ) of the second optical amplifier; and
wherein an optical connection, through the optical circuit, between the optical output port of the first optical amplifier and the first optical port of the second optical amplifier comprises:
a first optical pathway configured to direct light traveling in the first direction at the optical output port of the first optical amplifier to the first optical port of the second optical amplifier in a manner that causes the light so directed to travel in the second direction at the first optical port of the second optical amplifier; and
a second optical pathway (316,512) configured to direct light traveling in the second direction at the optical output port of the first optical amplifier to the first optical port of the second optical amplifier in a manner that causes the light so directed to travel in the second direction at the first optical port of the second optical amplifier;
wherein the first optical pathway includes a first narrow band-pass optical filter (320₂ₐ) located therein; and
wherein the second optical pathway (316,512) is configured to bypass the first narrow band-pass optical filter (320₂ₐ),
**characterised in that** the optical circuit (300,400,500,600,700) is further connected to optically couple an optical input port (358ₐ) of the first optical amplifier and a second optical port (358_{b},362_{b}) of the second optical amplifier; and
wherein an optical connection, through the optical circuit, between the optical input port of the first optical amplifier and the second optical port of the second optical amplifier comprises:
a third optical pathway configured to direct light traveling in the second direction at the second optical port of the second optical amplifier to the optical input port of the first optical amplifier in a manner that causes the light so directed to travel in the first direction at the optical input port of the first optical amplifier; and
a fourth optical pathway (312,516) configured to direct light traveling in the first direction at the second optical port of the second optical amplifier to the optical input port of the first optical amplifier in a manner that causes the light so directed to travel in the first direction at the optical input port of the first optical amplifier;
wherein the third optical pathway includes a second narrow band-pass optical filter (320_{1b}) located therein; and
wherein the fourth optical pathway (312,516) is configured to bypass the second narrow band-pass optical filter (320_{1b}).

2. The apparatus of claim 1, wherein the first optical port is an input port (358_{b}) of the second optical amplifier.

3. The apparatus of claim 1, wherein the first optical port is an output port (362_{b}) of the second optical amplifier.

4. The apparatus of claim 1,
wherein the first optical port is an input port (358_{b}) of the second optical amplifier; and wherein the second optical port is an output port (362_{b}) of the second optical amplifier.

5. The apparatus of claim 1,
wherein the first optical port is an output port (362_{b}) of the second optical amplifier; and wherein the second optical port is an input port (358_{b}) of the second optical amplifier.

6. The apparatus of claim 1,
wherein the first narrow band-pass optical filter has a transfer function that causes the first narrow band-pass optical filter to pass a first wavelength and reject a second wavelength; and
wherein the second narrow band-pass optical filter has a transfer function that causes the second narrow band-pass optical filter to pass the second wavelength and reject the first wavelength.

7. The apparatus of claim 1,
wherein the optical connection, through the optical circuit (400,500), between the optical output port (362ₐ) of the first optical amplifier and the first optical port (358_{b},362ₐ) of the second optical amplifier further comprises a fifth optical pathway configured to direct light traveling in the second direction at the first optical port of the second optical amplifier to the optical output port (362ₐ) of the first optical amplifier in a manner that causes the light so directed to travel in the first direction at the optical output port (362ₐ) of the first optical amplifier;
wherein the fifth optical pathway includes a third narrow band-pass optical filter (320_{2b},320_{1b}) located therein;
wherein the first narrow band-pass optical filter has a transfer function that causes the first narrow band-pass optical filter to pass a first wavelength and reject a second wavelength;
wherein the second narrow band-pass optical filter has a transfer function that causes the second narrow band-pass optical filter to pass the second wavelength and reject the first wavelength; and
wherein the third narrow band-pass optical filter is a nominal copy of the first narrow band-pass optical filter.

8. The apparatus of claim 7, wherein the second optical pathway (316,512) is configured to bypass the third narrow band-pass optical filter (320_{2b},320_{1b}).

9. The apparatus of claims 7 or 8,
wherein the optical connection, through the optical circuit(400,500), between the optical input port (358ₐ) of the first optical amplifier and the second optical port (358_{b},362_{b}) of the second optical amplifier further comprises a sixth optical pathway configured to direct light traveling in the first direction at the optical input port (358ₐ) of the first optical amplifier to the second optical port (358_{b},362_{b}) of the second optical amplifier in a manner that causes the light so directed to travel in the second direction at the second optical port (358_{b},362_{b}) of the second optical amplifier;
wherein the sixth optical pathway includes a fourth narrow band-pass optical filter (320_{1b},320_{2b}) located therein;
wherein the first narrow band-pass optical filter has a transfer function that causes the first narrow band-pass optical filter to pass a first wavelength and reject a second wavelength;
wherein the second narrow band-pass optical filter has a transfer function that causes the second narrow band-pass optical filter to pass the second wavelength and reject the first wavelength;
wherein the third narrow band-pass optical filter is a nominal copy of the first narrow band-pass optical filter; and
wherein the fourth narrow band-pass optical filter is a nominal copy of the second narrow band-pass optical filter.

10. The apparatus of claim 9, wherein the fourth optical pathway (312,516) is configured to bypass the fourth narrow band-pass optical filter (320_{1b},320_{2b}).

11. The apparatus of claim 1,
wherein the first narrow band-pass optical filter has a transfer function **characterized by** a bandwidth; and
wherein the first narrow band-pass optical filter does not employ a mirror configured to reflect in an opposite direction light applied thereto by the first optical pathway, the light being spectrally located within the bandwidth.

## Patentansprüche

1. Vorrichtung umfassend:
einen ersten optischen Verstärker (160ⱼₐ), der sich in einem ersten optischen Pfad (340ₐ) befindet und so konfiguriert ist, dass er optische Signale verstärkt, die in einer ersten Richtung übertragen werden;
einen zweiten optischen Verstärker (160_{jb}), der sich in einem zweiten optischen Pfad (340_{b}) befindet und so konfiguriert ist, dass er optische Signale verstärkt, die in einer zweiten Richtung übertragen werden, wobei die zweite Richtung entgegengesetzt zu der ersten Richtung ist; und
eine optische Schaltung (300, 400, 500, 600, 700), die angeschlossen ist, um einen optischen Ausgangsanschluss (362ₐ) des ersten optischen Verstärkers und einen ersten optischen Anschluss (358_{b}, 362ₐ) des zweiten optischen Verstärkers optisch zu koppeln; und
wobei eine optische Verbindung, durch die optische Schaltung, zwischen dem optischen Ausgangsanschluss des ersten optischen Verstärkers und dem ersten optischen Anschluss des zweiten optischen Verstärkers Folgendes umfasst:
einen ersten optischen Pfad, der so konfiguriert ist, dass er Licht, das sich in der ersten Richtung am optischen Ausgangsanschluss des ersten optischen Verstärkers ausbreitet, in einer Weise auf den ersten optischen Anschluss des zweiten optischen Verstärkers lenkt, die bewirkt, dass das so gelenkte Licht sich am ersten optischen Anschluss des zweiten optischen Verstärkers in der zweiten Richtung ausbreitet; und
einen zweiten optischen Pfad (316, 512), der so konfiguriert ist, dass er Licht, das sich in der zweiten Richtung am optischen Ausgangsanschluss des ersten optischen Verstärkers ausbreitet, in einer Weise auf den ersten optischen Anschluss des zweiten optischen Verstärkers lenkt, die bewirkt, dass das so gelenkte Licht sich am ersten optischen Anschluss des zweiten optischen Verstärkers in der zweiten Richtung ausbreitet;
wobei der erste optische Pfad einen ersten schmalen optischen Bandpassfilter (320₂ₐ) enthält, der darin angeordnet ist; und
wobei der zweite optische Pfad (316, 512) so konfiguriert ist, dass er den ersten schmalen optischen Bandpassfilter (320₂ₐ) umgeht,
**dadurch gekennzeichnet, dass**
die optische Schaltung (300, 400, 500, 600, 700) ferner angeschlossen ist, um einen optischen Eingangsanschluss (358ₐ) des ersten optischen Verstärkers und einen zweiten optischen Anschluss (358_{b}, 362_{b}) des zweiten optischen Verstärkers optisch zu koppeln; und
wobei eine optische Verbindung, durch die optische Schaltung, zwischen dem optischen Eingangsanschluss des ersten optischen Verstärkers und dem zweiten optischen Anschluss des zweiten optischen Verstärkers Folgendes umfasst:
einen dritten optischen Pfad, der so konfiguriert ist, dass er Licht, das sich in der zweiten Richtung am zweiten optischen Anschluss des zweiten optischen Verstärkers ausbreitet, in einer Weise auf den optischen Eingangsanschluss des ersten optischen Verstärkers lenkt, die bewirkt, dass das so gelenkte Licht sich am optischen Eingangsanschluss des ersten optischen Verstärkers in der ersten Richtung ausbreitet; und
einen vierten optischen Pfad (312, 516), der so konfiguriert ist, dass er Licht, das sich in der ersten Richtung am zweiten optischen Anschluss des zweiten optischen Verstärkers ausbreitet, in einer Weise auf den optischen Eingangsanschluss des ersten optischen Verstärkers lenkt, die bewirkt, dass das so gelenkte Licht sich am optischen Eingangsanschluss des ersten optischen Verstärkers in der ersten Richtung ausbreitet;
wobei der dritte optische Pfad einen zweiten schmalen optischen Bandpassfilter (320_{1b}) enthält, der darin angeordnet ist; und
wobei der vierte optische Pfad (312, 516) so konfiguriert ist, dass er den zweiten schmalen optischen Bandpassfilter (320_{1b}) umgeht.

2. Vorrichtung nach Anspruch 1, wobei der erste optische Anschluss ein Eingangsanschluss (358_{b}) des zweiten optischen Verstärkers ist.

3. Vorrichtung nach Anspruch 1, wobei der erste optische Anschluss ein Ausgangsanschluss (362_{b}) des zweiten optischen Verstärkers ist.

4. Vorrichtung nach Anspruch 1,
wobei der erste optische Anschluss ein Eingangsanschluss (358_{b}) des zweiten optischen Verstärkers ist; und
wobei der zweite optische Anschluss ein Ausgangsanschluss (362_{b}) des zweiten optischen Verstärkers ist.

5. Vorrichtung nach Anspruch 1,
wobei der erste optische Anschluss ein Ausgangsanschluss (362_{b}) des zweiten optischen Verstärkers ist; und
wobei der zweite optische Anschluss ein Eingangsanschluss (358_{b}) des zweiten optischen Verstärkers ist.

6. Vorrichtung nach Anspruch 1,
wobei der erste schmale optische Bandpassfilter eine Übertragungsfunktion aufweist, die bewirkt, dass der erste schmale optische Bandpassfilter eine erste Wellenlänge durchlässt und eine zweite Wellenlänge zurückweist; und
wobei der zweite schmale optische Bandpassfilter eine Übertragungsfunktion aufweist, die bewirkt, dass der zweite schmale optische Bandpassfilter die zweite Wellenlänge durchlässt und die erste Wellenlänge zurückweist.

7. Vorrichtung nach Anspruch 1,
wobei die optische Verbindung, durch die optische Schaltung (400, 500), zwischen dem optischen Ausgangsanschluss (362ₐ) des ersten optischen Verstärkers und dem ersten optischen Anschluss (358_{b}, 362ₐ) des zweiten optischen Verstärkers ferner Folgendes umfasst: einen fünften optischen Pfad, der so konfiguriert ist, dass er Licht, das sich in der zweiten Richtung am ersten optischen Anschluss des zweiten optischen Verstärkers ausbreitet, in einer Weise auf den optischen Ausgangsanschluss (362ₐ) des ersten optischen Verstärkers lenkt, die bewirkt, dass das so gelenkte Licht sich am optischen Ausgangsanschluss (362ₐ) des ersten optischen Verstärkers in der ersten Richtung ausbreitet;
wobei der fünfte optische Pfad einen dritten schmalen optischen Bandpassfilter (320_{2b}, 320_{1b}) enthält, der darin angeordnet ist;
wobei der erste schmale optische Bandpassfilter eine Übertragungsfunktion aufweist, die bewirkt, dass der erste schmale optische Bandpassfilter eine erste Wellenlänge durchlässt und eine zweite Wellenlänge zurückweist;
wobei der zweite schmale optische Bandpassfilter eine Übertragungsfunktion aufweist, die bewirkt, dass der zweite schmale optische Bandpassfilter die zweite Wellenlänge durchlässt und die erste Wellenlänge; und
wobei der dritte schmale optische Bandpassfilter eine nominelle Kopie des ersten schmalen optischen Bandpassfilters ist.

8. Vorrichtung nach Anspruch 7, wobei der zweite optische Pfad (316, 512) so konfiguriert ist, dass er den dritten schmalen optischen Bandpassfilter (320_{2b}, 320_{1b}) umgeht.

9. Vorrichtung nach Anspruch 7 oder 8,
wobei die optische Verbindung, durch die optische Schaltung (400, 500), zwischen dem optischen Eingangsanschluss (358ₐ) des ersten optischen Verstärkers und dem zweiten optischen Anschluss (358_{b}, 362_{b}) des zweiten optischen Verstärkers Folgendes umfasst: einen sechsten optischen Pfad, der so konfiguriert ist, dass er Licht, das sich in der ersten Richtung am optischen Eingangsanschluss (358ₐ) des ersten optischen Verstärkers ausbreitet, in einer Weise auf den zweiten optischen Anschluss (358_{b}, 362_{b}) des zweiten optischen Verstärkers lenkt, die bewirkt, dass das so gelenkte Licht sich am zweiten optischen Anschluss (358_{b}, 362_{b}) des zweiten optischen Verstärkers in der zweiten Richtung ausbreitet;
wobei der sechste optische Pfad einen vierten schmalen optischen Bandpassfilter (320_{1b}, 320_{2b}) enthält, der darin angeordnet ist;
wobei der erste schmale optische Bandpassfilter eine Übertragungsfunktion aufweist, die bewirkt, dass der erste schmale optische Bandpassfilter eine erste Wellenlänge durchlässt und eine zweite Wellenlänge zurückweist;
wobei der zweite schmale optische Bandpassfilter eine Übertragungsfunktion aufweist, die bewirkt, dass der zweite schmale optische Bandpassfilter die zweite Wellenlänge durchlässt und die erste Wellenlänge zurückweist;
wobei der dritte schmale optische Bandpassfilter eine nominelle Kopie des ersten schmalen optischen Bandpassfilters; und
wobei der vierte schmale optische Bandpassfilter eine nominelle Kopie des zweiten schmalen optischen Bandpassfilters ist.

10. Vorrichtung nach Anspruch 9, wobei der vierte optische Pfad (312, 516) so konfiguriert ist, dass er den vierten schmalen optischen Bandpassfilter (320_{1b}, 320_{2b}) umgeht.

11. Vorrichtung nach Anspruch 1,
wobei der erste schmale optische Bandpassfilter eine Übertragungsfunktion aufweist, die durch eine Bandbreite gekennzeichnet ist; und
wobei der erste schmale optische Bandpassfilter keinen Spiegel verwendet, der so konfiguriert ist, dass er Licht, das durch den ersten optischen Pfad darauf aufgebracht wird, in einer entgegengesetzten Richtung reflektiert, wobei das Licht spektral innerhalb der Bandbreite liegt.

## Revendications

1. Appareil qui comprend :
un premier amplificateur optique (106ⱼₐ) situé sur un premier trajet optique (340ₐ) et configuré pour amplifier les signaux optiques transmis dans une première direction ;
un second amplificateur optique (160_{jb}) situé sur un second trajet optique (340_{b}) et configuré pour amplifier les signaux optiques transmis dans une seconde direction, dans lequel la seconde direction est opposée à la première direction ; et
un circuit optique (300, 400, 500, 600, 700) relié afin de coupler optiquement un port de sortie optique (362ₐ) du premier amplificateur optique et un premier port optique (358_{b}, 362ₐ) du second amplificateur optique ; et
dans lequel une liaison optique, par le biais du circuit optique, entre le port de sortie optique du premier amplificateur optique et le premier port optique du second amplificateur optique comprend :
un premier trajet optique configuré pour orienter la lumière qui se déplace dans la première direction au niveau du port de sortie optique du premier amplificateur optique vers le premier port optique du second amplificateur optique de sorte que la lumière ainsi orientée se déplace dans la seconde direction au niveau du premier port optique du second amplificateur optique ; et
un second trajet optique (316, 512) configuré pour orienter la lumière qui se déplace dans la seconde direction au niveau du port de sortie optique du premier amplificateur optique vers le premier port optique du second amplificateur optique de sorte que la lumière ainsi orientée se déplace dans la seconde direction au niveau du premier port optique du second amplificateur optique ;
dans lequel le premier trajet optique comprend un premier filtre optique à bande passante étroite (320₂ₐ) situé à l'intérieur ; et
dans lequel le second trajet optique (316, 512) est configuré pour contourner le premier filtre optique à bande passante étroite (320₂ₐ),
**caractérisé en ce que**
le circuit optique (300, 400, 500, 600, 700) est en outre relié pour coupler optiquement un port d'entrée optique (358ₐ) du premier amplificateur optique et un second port optique (358_{b}, 362_{b}) du second amplificateur optique ; et
dans lequel une liaison optique, par le biais du circuit optique, entre le port d'entrée optique du premier amplificateur optique et le second port optique du second amplificateur optique comprend :
un troisième trajet optique configuré pour orienter la lumière qui se déplace dans la seconde direction au niveau du second port optique du second amplificateur optique vers le port d'entrée optique du premier amplificateur optique de sorte que la lumière ainsi orientée se déplace dans la première direction au niveau du port d'entrée optique du premier amplificateur optique ; et
un quatrième trajet optique (312, 516) configuré pour orienter la lumière qui se déplace dans la première direction au niveau du second port optique du second amplificateur optique vers le port d'entrée optique du premier amplificateur optique de sorte que la lumière ainsi orientée se déplace dans la première direction au niveau du port d'entrée optique du premier amplificateur optique ;
dans lequel le troisième trajet optique comprend un second filtre optique à bande passante étroite (320_{1b}) situé à l'intérieur ; et
dans lequel le quatrième trajet optique (312, 516) est configuré pour contourner le second filtre optique à bande passante étroite (320_{1b}) .

2. Appareil selon la revendication 1, dans lequel le premier port optique est un port d'entrée (358_{b}) du second amplificateur optique.

3. Appareil selon la revendication 1, dans lequel le premier port optique est un port de sortie (362_{b}) du second amplificateur optique.

4. Appareil selon la revendication 1,
dans lequel le premier port optique est un port d'entrée (358_{b}) du second amplificateur optique ; et
dans lequel le second port optique est un port de sortie (362_{b}) du second amplificateur optique.

5. Appareil selon la revendication 1,
dans lequel le premier port optique est un port de sortie (362_{b}) du second amplificateur optique ; et
dans lequel le second port optique est un port d'entrée (358_{b}) du second amplificateur optique.

6. Appareil selon la revendication 1,
dans lequel le premier filtre optique à bande passante étroite possède une fonction de transfert qui permet au premier filtre optique à bande passante étroite de laisser passer une première longueur d'onde et de rejeter une seconde longueur d'onde ; et
dans lequel le second filtre optique à bande passante étroite possède une fonction de transfert qui permet au second filtre optique à bande passante étroite de laisser passer la seconde longueur d'onde et de rejeter la première longueur d'onde.

7. Appareil selon la revendication 1,
dans lequel la liaison optique, par le biais du circuit optique (400, 500), entre le port de sortie optique (362ₐ) du premier amplificateur optique et le premier port optique (358_{b}, 362ₐ) du second amplificateur optique comprend en outre un cinquième trajet optique configuré pour orienter la lumière qui se déplace dans la seconde direction au niveau du premier port optique du second amplificateur optique vers le port de sortie optique (362ₐ) du premier amplificateur optique de sorte que la lumière ainsi orientée se déplace dans la première direction au niveau du port de sortie optique (362ₐ) du premier amplificateur optique ;
dans lequel le cinquième trajet optique comprend un troisième filtre optique à bande passante étroite (320_{2b}, 320_{1b}) situé à l'intérieur ;
dans lequel le premier filtre optique à bande passante étroite possède une fonction de transfert qui permet au premier filtre optique à bande passante étroite de laisser passer une première longueur d'onde et de rejeter une seconde longueur d'onde ;
dans lequel le second filtre optique à bande passante étroite possède une fonction de transfert qui permet au second filtre optique à bande passante étroite de laisser passer la seconde longueur d'onde et de rejeter la première longueur d'onde ; et
dans lequel le troisième filtre optique à bande passante étroite est une copie nominale du premier filtre optique à bande passante étroite.

8. Appareil selon la revendication 7, dans lequel le second trajet optique (316, 512) est configuré pour contourner le troisième filtre optique à bande passante étroite (320_{2b}, 320_{1b}).

9. Appareil selon la revendication 7 ou 8,
dans lequel la liaison optique, par le biais du circuit optique (400, 500), entre le port d'entrée optique (358ₐ) du premier amplificateur optique et le second port optique (358_{b}, 362_{b}) du second amplificateur optique comprend en outre un sixième trajet optique configuré pour orienter la lumière qui se déplace dans la première direction au niveau du port d'entrée optique (358ₐ) du premier amplificateur optique vers le second port optique (358_{b}, 362_{b}) du second amplificateur optique de sorte que la lumière ainsi orientée se déplace dans la seconde direction au niveau du second port optique (358_{b}, 362_{b}) du second amplificateur optique ;
dans lequel le sixième trajet optique comprend un quatrième filtre optique à bande passante étroite (320_{1b}, 320_{2b}) situé à l'intérieur ;
dans lequel le premier filtre optique à bande passante étroite possède une fonction de transfert qui permet au premier filtre optique à bande passante étroite de laisser passer une première longueur d'onde et de rejeter une seconde longueur d'onde ;
dans lequel le second filtre optique à bande passante étroite possède une fonction de transfert qui permet au second filtre optique à bande passante étroite de laisser passer la seconde longueur d'onde et de rejeter la première longueur d'onde ;
dans lequel le troisième filtre optique à bande passante étroite est une copie nominale du premier filtre optique à bande passante étroite ; et
dans lequel le quatrième filtre optique à bande passante étroite est une copie nominale du second filtre optique à bande passante étroite.

10. Appareil selon la revendication 9, dans lequel le quatrième trajet optique (312, 516) est configuré pour contourner le quatrième filtre optique à bande passante étroite (320_{1b}, 320_{2b}).

11. Appareil selon la revendication 1,
dans lequel le premier filtre optique à bande passante étroite possède une fonction de transfert **caractérisée par** une bande passante ; et
dans lequel le premier filtre optique à bande passante étroite n'utilise pas de miroir configuré pour réfléchir dans une direction opposée la lumière appliquée à celui-ci par le premier trajet optique, dans lequel la lumière est située spectralement sur la bande passante.
